(19) Europäisches Patentamt
European Patent Office
Office européen des brevets

(11) **EP 3 811 067 B1**

(12) **FASCICULE DE BREVET EUROPEEN**

(45) Date de publication et mention de la délivrance du brevet:
**11.05.2022 Bulletin 2022/19**

(21) Numéro de dépôt: **19736318.7**

(22) Date de dépôt: **25.06.2019**

(51) Classification Internationale des Brevets (IPC):
***G01N 23/227*** [(2018.01)]

(52) Classification Coopérative des Brevets (CPC):
**G01N 23/227**

(86) Numéro de dépôt international:
**PCT/EP2019/066748**

(87) Numéro de publication internationale:
**WO 2020/002283 (02.01.2020 Gazette 2020/01)**

(54) **PROCÉDÉ ET SYSTÈME DE MESURE DE LA CHIRALITÉ DE MOLECULES**

VERFAHREN UND SYSTEM ZUR MESSUNG DER CHIRALITÄT VON MOLEKÜLEN

METHOD AND SYSTEM FOR MEASURING THE CHIRALITY OF MOLECULES

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **25.06.2018 FR 1855683**

(43) Date de publication de la demande:
**28.04.2021 Bulletin 2021/17**

(73) Titulaires:
• **Centre national de la recherche scientifique**
**75016 Paris (FR)**
• **UNIVERSITE DE BORDEAUX**
**33000 Bordeaux (FR)**

(72) Inventeurs:
• **MAIRESSE, Yann**
**33800 Bordeaux (FR)**
• **COMBY, Antoine**
**33405 Talence Cedex (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**WO-A1-2018/060120**

• **CHRISTIAN LUX ET AL: "Photoelectron Circular Dichroism of Bicyclic Ketones from Multiphoton Ionization with Femtosecond Laser Pulses", CHEMPHYSCHEM, WILEY-VCH VERLAG GMBH & CO, vol. 16, no. 1, 12 janvier 2015 (2015-01-12), pages 115-137, XP002790220, ISSN: 1439-7641, DOI: 10.1002/CPHC.201402643 [extrait le 2014-12-09]**
• **N. B?WERING ET AL: "Asymmetry in Photoelectron Emission from Chiral Molecules Induced by Circularly Polarized Light", PHYSICAL REVIEW LETTERS, vol. 86, no. 7, 1 février 2001 (2001-02-01), pages 1187-1190, XP055422426, US ISSN: 0031-9007, DOI: 10.1103/PhysRevLett.86.1187**
• **Maurice H. M. Janssen ET AL: "Detecting chirality in molecules by imaging photoelectron circular dichroism", PHYSICAL CHEMISTRY CHEMICAL PHYSICS, vol. 16, no. 3, 1 January 2014 (2014-01-01), pages 856-871, XP055422457, ISSN: 1463-9076, DOI: 10.1039/C3CP53741B**
• **CHRISTIAN LUX ET AL: "Photoelectron circular dichroism observed in the above-threshold ionization signal from chiral molecules with femtosecond laser pulses", JOURNAL OF PHYSICS B, ATOMIC MOLECULAR AND OPTICAL PHYSICS, INSTITUTE OF PHYSICS PUBLISHING, BRISTOL, GB, vol. 49, no. 2, 23 December 2015 (2015-12-23), XP020296260, ISSN: 0953-4075, DOI: 10.1088/0953-4075/49/2/02LT01 [retrieved on 2015-12-23]**

**Description**

**Domaine technique**

La présente invention concerne un procédé de mesure de la chiralité de molécules dans un échantillon de molécules chirales, l'échantillon comprenant au moins une espèce chimique de molécules chirales. Elle concerne également un système de mesure mettant en œuvre un tel procédé.

Le domaine de l'invention est le domaine de l'analyse chimique de mélanges de molécules chirales.

**État de la technique**

L'analyse de mélanges chimiques est un outil essentiel dans de nombreux processus industriels, tant en R&D qu'en contrôle qualité. Les molécules chirales, qui existent sous au moins deux formes appelées énantiomères qui ne sont pas superposables à leur image miroir, sont particulièrement difficiles à analyser. Or, ces molécules jouent un rôle crucial dans de nombreux domaines industriels tels que la pharmacologie, l'agro-alimentaire, l'agrochimie, etc., où la pureté énantiomérique peut être d'une importance capitale. Par exemple, des composés pharmaceutiques peuvent comprendre des molécules chirales, et comme la réaction d'un organisme à une molécule peut dépendre de sa chiralité, il est crucial de connaître la composition énantiomérique des molécules de ces composés.

De nombreuses méthodes ont été développées pour mesurer la pureté énantiomérique.

Une technique historique pour l'analyse de la chiralité moléculaire repose sur le dichroïsme circulaire (CD). En mesurant la différence d'absorption d'un rayonnement polarisé circulairement droite ou gauche, on peut obtenir de l'information sur la chiralité d'un échantillon. Cependant, le CD est un effet très faible, qui requiert des échantillons denses (liquides) et donc de grandes quantités de matière. Il fournit des signaux faibles, nécessitant de longues acquisitions pour obtenir un bon rapport signal sur bruit.

Une autre technique reconnue, basée sur le dichroïsme circulaire de photoélectrons (PECD), consiste en l'ionisation des molécules chirales d'un échantillon gazeux par un rayonnement polarisé circulairement. La distribution angulaire des électrons éjectés par l'ionisation présente une forte asymétrie le long de l'axe de propagation de la lumière. Ainsi, plus ou moins d'électrons sont émis vers l'avant ou vers l'arrière selon l'hélicité de la lumière (sens de rotation de la polarisation circulaire) ou l'énantiomérie de la molécule. Cette technique peut utiliser du rayonnement dans la gamme ultraviolet extrême (XUV) pour une ionisation à un seul photon, ou du rayonnement laser ultraviolet, visible ou infrarouge, auquel cas l'ionisation est multi-photonique. Un exemple est décrit dans le document WO2018/060120 A1.

Christian Lux et al, "Photoelectron Circular Dichroism of Bicyclic Ketones from Multiphoton Ionization with Femtosecond Laser Puises" (XP002790220, DOI: 10.1002/CPHC.201402643) divulgue un procédé de mesure de la chiralité de molécules dans un échantillon de molécules chirales en utilisant rayonnement électromagnétique polarisé elliptiquement.

L'analyse énantiomérique est plus complexe dans le cas d'un mélange contenant plusieurs espèces chimiques. Les techniques actuelles utilisant le PECD reposent sur la détection simultanée des électrons et des ions produits, en coïncidence pour savoir de quel ion est issu chaque électron. Ce type de détection nécessite de mesurer au maximum un évènement par impulsion laser pour ne produire qu'un électron et pouvoir l'assigner à son ion parent. Cela limite donc considérablement la rapidité et la précision de ce type de mesure.

**Exposé de l'invention**

Un but de la présente invention est de proposer un procédé et un système de mesure permettant l'analyse de la composition chimique et énantiomérique d'échantillons de manière simple, fiable et rapide.

Un autre but de la présente invention est de proposer un procédé et un système de mesure permettant le suivi ou le contrôle en continu de la composition d'un échantillon de molécules chirales.

Un autre but de la présente invention est de proposer un procédé et un système de mesure permettant le suivi ou le contrôle en continu de la proportion relative d'espèces d'un échantillon multi-espèces et de déterminer l'excès énantiomérique de chaque espèce.

Il est aussi un but de la présente invention de proposer un procédé et un système de mesure ne nécessitant aucune préparation des échantillons et ne nécessitant qu'une faible consommation d'échantillon.

Enfin, il est un but de la présente invention de proposer un procédé et un système de mesure ne nécessitant aucune détection d'ions.

Au moins un de ces objectifs est atteint avec un procédé de mesure de la chiralité de molécules dans un échantillon de molécules chirales, l'échantillon comprenant au moins une espèce chimique, le procédé comprenant les étapes suivantes :

- introduction de l'échantillon de molécules chirales dans une zone d'ionisation ;
- ionisation des molécules au moyen d'un rayonnement électromagnétique dans la zone d'ionisation ;
- détection d'une distribution d'électrons produits par l'ionisation et émis en avant et en arrière de la zone d'ionisation par rapport à l'axe, z, de propagation du rayonnement électromagnétique ; et
- détermination de la chiralité des molécules à partir de la distribution d'électrons détectée de manière continue en fonction du temps.

Le rayonnement électromagnétique est polarisé elliptiquement, l'ellipticité de polarisation du rayonnement variant de manière continue et périodique en fonction du temps.

Dans le cadre de la présente invention, le terme « distribution d'électrons » peut signifier à la fois :

- un nombre d'électrons, obtenu par simple comptage,
- une distribution spatiale d'électrons, ou
- une distribution angulaire d'électrons,

les électrons étant émis vers l'avant et vers l'arrière de la zone d'ionisation par rapport à l'axe de propagation du rayonnement ionisant.

Ainsi, dans le cadre de la présente invention, la chiralité des molécules de l'échantillon peut être déterminée à partir du nombre d'électrons émis en avant et du nombre d'électrons émis en arrière.

La technique proposée par le procédé selon l'invention est basée sur le dichroïsme elliptique des électrons, ou photoélectrons, mesuré en continu. Ainsi, l'évolution de la distribution des électrons émis en avant et en arrière, et donc de son asymétrie, est mesurée en fonction du temps et en fonction de l'état de polarisation du rayonnement électromagnétique. En faisant varier l'ellipticité de la polarisation du rayonnement de manière continue et périodique en fonction du temps, la polarisation oscille de manière continue et périodique entre les polarisations circulaire gauche - elliptique gauche - linéaire - elliptique droite - circulaire droite. La mesure d'un signal périodique en continu permet par la suite d'effectuer des analyses de l'échantillon de molécules plus simples et rapides.

Avantageusement, l'étape de détermination de la chiralité peut être réalisée en temps réel.

Selon un mode de réalisation particulièrement avantageux, l'étape de détection peut être effectuée par des mesures du nombre d'électrons, émis en avant et en arrière de la zone d'ionisation par rapport à l'axe z de propagation du rayonnement électromagnétique, à des instants $t_i$ (i = 1, 2, ...), le nombre mesuré étant intégré pendant un intervalle $\Delta t = (t_i - t_{i-1})$ pour chaque mesure.

Ainsi, tout le temps de mesure est utile pour échantillonner le signal correctement, sans qu'il y ait de temps perdu.

Suivant un exemple de réalisation non limitatif, l'étape de détermination de la chiralité des molécules peut comprendre une étape de comparaison d'un nombre d'électrons détectés en avant et d'un nombre d'électrons détectés en arrière de la zone d'ionisation par rapport à l'axe z de propagation du rayonnement électromagnétique.

Avantageusement, le procédé selon l'invention peut comprendre en outre une étape d'analyse de Fourier d'une évolution temporelle de la distribution d'électrons pour obtenir le spectre fréquentiel de la distribution.

En effet, en modulant de manière périodique l'état de polarisation du rayonnement ionisant, le signal détecté en forme de distribution d'électrons possède également une périodicité. Cette périodicité permet des analyses simples du signal et notamment une étape d'analyse de Fourier, consistant en la réalisation d'une transformée de Fourier. La transformée de Fourier permet, via le spectre fréquentiel de l'évolution temporelle de la distribution d'électrons, d'accéder à d'autres propriétés de l'échantillon de molécules, tels qu'un excès énantiomérique et son évolution temporelle.

Ainsi, en considérant un échantillon de molécules mono-espèce, le procédé selon l'invention peut comprendre en outre une étape de détermination de l'excès énantiomérique à partir du spectre fréquentiel de la distribution d'électrons.

De manière avantageuse, la transformée de Fourier peut également être effectuée sur des tranches temporelles successives de la distribution d'électrons. Il est alors possible de suivre l'évolution temporelle de l'excès énantiomérique.

Alternativement, l'évolution temporelle de la distribution d'électrons peut être obtenue directement à partir d'une analyse d'un signal électronique, par exemple en utilisant un jeu de filtres électroniques permettant de mesurer les différentes composantes de la transformée de Fourier, ou en utilisant un analyseur de spectre électronique.

Selon un mode de réalisation, le procédé selon l'invention peut comprendre en outre une étape de génération d'une carte de distribution spatiale et/ou angulaire des électrons à partir de la distribution des électrons en fonction du temps.

Selon un exemple, la carte de distribution peut être une carte de vitesses des électrons.

Cette carte est constituée par le nombre d'électrons atterrissant sur un détecteur. La position sur le détecteur reflète la vitesse qu'avaient les électrons lors de l'ionisation ainsi que leur direction d'émission. Chaque espèce de molécules chirales a une carte de vitesses spécifique.

Avantageusement, le procédé selon l'invention peut comprendre en outre une étape d'analyse de Fourier de chaque composante de la carte de distribution.

Alternativement ou en plus, le procédé selon l'invention peut comprendre en outre les étapes suivantes :

- détermination de la projection de la carte de distribution sur l'axe de propagation du rayonnement électromagnétique ; et
- analyse de Fourier de l'évolution temporelle de la projection pour obtenir le spectre fréquentiel.

Selon une variante, la projection de la carte de distribution peut être mesurée directement avec un détecteur unidimensionnel adapté.

De manière avantageuse, pour un échantillon de molécules multi-espèces, le procédé peut comprendre en outre une étape de détermination des espèces de l'échantillon à partir du spectre fréquentiel de la projection de la carte de distribution.

Selon un mode de réalisation, le procédé selon l'invention peut comprendre en outre une étape de détermination de l'excès énantiomérique à partir du spectre fréquentiel de la projection de la carte de distribution.

De manière avantageuse, en plus de la modulation de la polarisation, d'autres paramètres du rayonnement électromagnétique peuvent être modulés temporellement, par exemple l'énergie (ou l'intensité), la longueur d'onde ou la durée des impulsions laser. L'évolution temporelle de la distribution d'électrons est alors différente de, ou enrichie par rapport à, une distribution pour laquelle seulement l'ellipticité de la polarisation a été modulée. Dans le spectre de Fourier d'une telle distribution d'électrons enrichie, le nombre de composantes, ou pics, présentes est augmenté par rapport à une distribution où seulement l'ellipticité de la polarisation a été modulée. Le plus grand nombre de composantes permet alors des analyses plus fines de la composition chimique et énantiomérique d'échantillons de molécules multi-espèces ainsi que de leur suivi en temps réel.

Suivant un autre aspect de la même invention, il est proposé un système de mesure de la chiralité, comprenant :

- une zone d'ionisation agencée pour recevoir un échantillon de molécules chirales comprenant au moins une espèce chimique ;
- une source de rayonnement électromagnétique agencée pour émettre un rayonnement électromagnétique et ioniser les molécules chirales dans la zone d'ionisation par le rayonnement électromagnétique ;
- des moyens de détection d'électrons agencés pour détecter une distribution d'électrons produits par l'ionisation et émis en avant et en arrière de la zone d'ionisation par rapport à l'axe, z, de propagation du rayonnement électromagnétique ;
- un modulateur de polarisation agencé pour polariser le rayonnement électromagnétique elliptiquement et agencé pour faire varier l'ellipticité de polarisation du rayonnement de manière continue et périodique en fonction du temps ; et
- un dispositif de détermination agencé et/programmé pour déterminer la chiralité des molécules à partir de la distribution d'électrons détectée de manière continue en fonction du temps.

Selon des exemples non limitatifs, les moyens de détection d'électrons peuvent comprendre au moins un d'un détecteur d'asymétrie d'éjection à champ magnétique et d'un spectromètre pour l'imagerie de cartes de vitesse.

De manière particulièrement avantageuse, la source de rayonnement électromagnétique peut être une source laser.

De préférence, la source laser est une source laser pulsée délivrant des impulsions femto-secondes.

Selon un exemple non limitatif, la longueur d'onde de la source laser pulsée peut être dans le domaine allant de l'ultraviolet au visible.

Selon une variante avantageuse, la source laser pulsée peut être un laser fibré à haute cadence.

De telles sources laser sont disponibles dans le commerce et sont faciles à mettre en œuvre avec le système selon l'invention.

De manière générale, la longueur d'onde de la source de rayonnement électromagnétique détermine le type d'ionisation des molécules, soit l'ionisation à un seul photon, soit l'ionisation multi-photonique.

En effet, des sources laser pulsées ayant des longueurs d'onde dans le domaine visible, l'infrarouge ou l'ultraviolet produisent du rayonnement susceptible de provoquer de l'ionisation multi-photonique. En revanche, des sources lumineuses d'ultraviolet lointain ou extrême peuvent induire l'ionisation à un seul photon, qu'elles soient continues ou pulsées.

Selon un mode de réalisation, le système selon l'invention peut comprendre en outre un modulateur de la durée des impulsions de la source laser.

Selon un mode de réalisation, le système selon l'invention peut comprendre en outre un détecteur d'ions agencé pour détecter les molécules ionisées.

Le détecteur d'ions peut, par exemple, être un spectromètre de masse.

Même si le détecteur d'ions n'est pas essentiel pour la mise en œuvre du procédé selon la présente invention, il peut néanmoins être utile pour suivre l'évolution temporelle de la composition chimique de l'échantillon et apporter une précision supplémentaire à l'analyse énantiomérique de mélanges multi-espèces selon la présente invention.

Avantageusement, le modulateur de polarisation peut comprendre une lame quart d'onde agencée pour être mise en rotation autour de l'axe de propagation du rayonnement.

Un tel modulateur est particulièrement simple à mettre en œuvre, peu encombrant et économique. Des dispositifs de mise en rotation motorisés disponibles dans le commerce peuvent être utilisés avec la lame quart d'onde.

Il est également possible d'utiliser d'autres types de modulateurs de polarisation, tels que des éléments électro-optiques (cellule de Pockels, etc.).

Selon une variante, l'ellipticité de la polarisation peut être modulée par contrôle interférométrique des deux composantes de polarisation.

Avantageusement, le système selon l'invention peut comprendre en outre un modulateur d'intensité du rayonnement électromagnétique et/ou un modulateur de la longueur d'onde du rayonnement électromagnétique.

Typiquement, le dispositif de détermination comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Avantageusement, le système selon l'invention est agencé pour mettre en œuvre le procédé selon l'invention.

Selon un mode de réalisation, le dispositif de détermination est agencé et/ou programmé pour déterminer la chiralité en temps réel.

Selon un exemple, les moyens de détection sont agencés pour effectuer des mesures du nombre d'électrons, émis en avant et en arrière de la zone d'ionisation par rapport à l'axe de propagation du rayonnement électromagnétique, à des instants $t_i$ (i = 1, 2, ...), le dispositif de détermination étant agencé et/ou programmé pour intégrer le nombre mesuré pendant un intervalle $\Delta t = (t_i - t_{i-1})$ pour chaque mesure.

Selon un mode de réalisation, le dispositif de détermination est agencé et/ou programmé pour comparer un nombre d'électrons détectés en avant et un nombre d'électrons détectés en arrière de la zone d'ionisation par rapport à l'axe de propagation du rayonnement électromagnétique, les moyens de détection étant agencés pour détecter les nombres d'électrons.

Avantageusement, le dispositif de détermination est agencé et/ou programmé pour réaliser une analyse de Fourier d'une évolution temporelle de la distribution d'électrons pour obtenir le spectre fréquentiel de la distribution.

Selon un exemple, pour un échantillon de molécules mono-espèce, le dispositif de détermination est agencé et/ou programmé pour déterminer un excès énantiomérique à partir du spectre fréquentiel de la distribution d'électrons.

Selon un mode de réalisation, le dispositif de détermination est agencé et/ou programmé pour générer une carte de distribution spatiale et/ou angulaire des électrons à partir de la distribution des électrons en fonction du temps.

Selon une variante, le dispositif de détermination est agencé et/ou programmé pour réaliser une analyse de Fourier de chaque composante de la carte de distribution.

Selon un mode de réalisation, le dispositif de détermination est agencé et/ou programmé pour :

- déterminer la projection de la distribution sur l'axe de propagation du rayonnement électromagnétique ; et
- réaliser une analyse de Fourier de l'évolution temporelle de la projection pour obtenir le spectre fréquentiel.

Selon un exemple, pour un échantillon de molécules multi-espèces, le dispositif de détermination est agencé et/ou programmé pour déterminer les espèces de l'échantillon à partir du spectre fréquentiel de la projection de la carte de distribution.

Selon un autre exemple, le dispositif de détermination est agencé et/ou programmé pour déterminer l'excès énantiomérique à partir du spectre fréquentiel de la projection de la carte de distribution.

Le procédé et le système selon l'invention peuvent chacun être utilisé pour la mesure de la chiralité de molécules dans le domaine de la pharmacologie, de l'agro-alimentaire ou encore des pesticides. En effet, ces industries, parmi d'autres, ont besoin de techniques d'analyse chirale fiables et rapides, notamment dans les phases de développement de nouveaux composés, afin d'identifier, par exemple, les produits de réaction et leurs excès énantiomériques.

Selon un premier exemple d'application, il peut être très utile de suivre en temps réel la composition d'un mélange dans lequel se déroule une réaction chimique. Ce suivi réactionnel peut être réalisé directement avec le procédé et le système selon l'invention, notamment en collectant les vapeurs émises par le réservoir dans lequel se déroule la réaction.

Selon un deuxième exemple d'application, il peut être très utile de procéder à des mesures d'analyse chirale en série, notamment lors de la synthèse de multiples produits aux structures très proches dans la recherche et le développement, où les facteurs fiabilité et rapidité sont très importants. Par exemple, à une molécule de base peuvent être substitués différents groupes fonctionnels pour converger vers un composé présentant des propriétés recherchées optimales. Dans ce domaine spécialisé, les composés intermédiaires à mesurer sont souvent générés en faible quantité, contrainte que le procédé et le système selon la présente invention proposent à respecter.

Selon un troisième exemple d'application, l'analyse chirale est effectuée en contrôle de qualité et notamment en fin de production. Idéalement, un prélèvement très régulier, voire en continu, de très petites quantités de produits à analyser avec une analyse en temps réel permet de quantifier l'excès énantiomérique et son évolution dans le temps.

Plus généralement, le procédé et le système de mesure selon l'invention peuvent chacun être utilisé pour l'analyse de la pureté énantiomérique d'un échantillon de molécules chirales.

## Description des figures et modes de réalisation

D'autres avantages et caractéristiques apparaîtront à l'examen de la description détaillée d'exemples nullement limitatifs, et des dessins annexés sur lesquels :

- la Figure 1 est une représentation schématique d'un exemple de réalisation non limitatif d'un dispositif selon l'invention ;

- la Figure 2A est une représentation schématique de la polarisation du rayonnement laser d'un dispositif selon l'invention;

- les Figures 2B et 2C sont des représentations schématiques d'un exemple d'analyse non limitatif d'un échantillon de molécules chirales avec le dispositif ou le procédé selon la présente invention ;

- la Figure 3 représente un schéma de modes de réalisation du procédé selon la présente invention ;

- la Figure 4 est un exemple de mesure de l'excès énantiomérique selon un mode de réalisation du procédé de la présente invention ;

- la Figure 5 est une représentation schématique d'un exemple d'analyse non limitatif d'échantillons mono-espèces avec la présente invention ; et

- les Figures 6A à 6D sont des représentations schématiques d'exemples d'analyse non limitatifs d'un échantillon de mélanges de molécules chirales multi-espèces avec la présente invention.

Sur les figures, les éléments communs à plusieurs figures conservent la même référence.

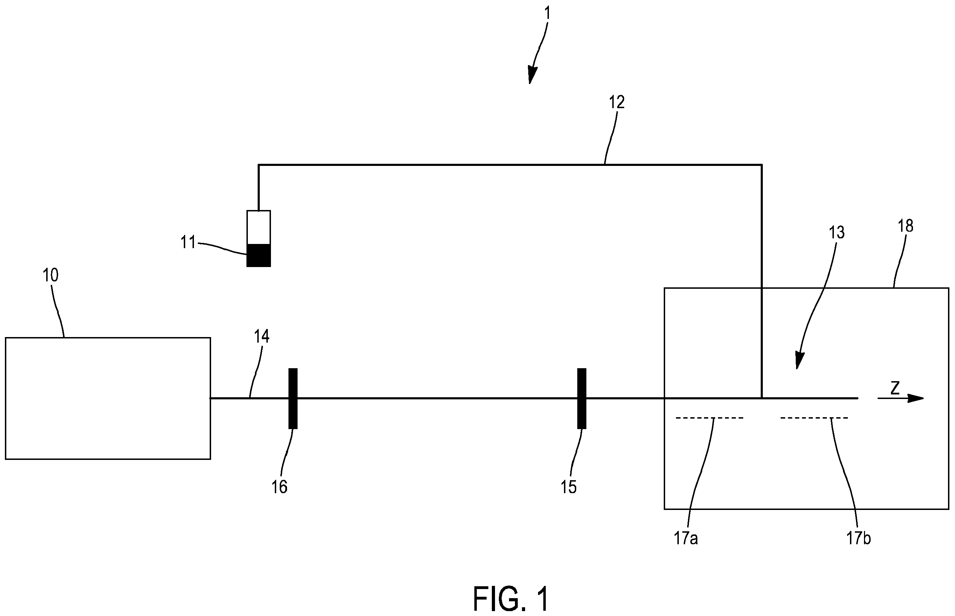

La Figure 1 est une représentation schématique d'un exemple de réalisation non limitatif d'un système de mesure selon l'invention.

Le système 1, représenté sur la Figure 1, comprend une source 10 de rayonnement électromagnétique, par exemple un laser pulsé.

De préférence, cette source laser 10 est un laser fibré pulsé émettant dans le domaine infrarouge (par exemple, à 1030 nm), éventuellement associé à des cristaux non-linéaires, par exemple un cristal doubleur pour produire du rayonnement autour de 515 nm. Les impulsions émises sont des impulsions femto-secondes, avec une cadence d'environ 2 millions d'impulsions par seconde. L'énergie par impulsion est de l'ordre de quelques $\mu$J. Avec une telle source laser, l'ionisation de molécules est une ionisation multi-photonique résonante.

Il existe différents types de sources laser femto-secondes utilisables dans le cadre de l'invention, qui sont bien connues de l'homme du métier et ne seront pas détaillées ici.

Le système 1 comprend en outre un réservoir 11 de molécules. Le mélange de molécules dans le réservoir 11 peut être mono- ou multi-espèce. Le mélange peut être présent sous forme solide, liquide ou gazeuse. Le réservoir 11 peut être, par exemple, une fiole.

Un échantillon de molécules est acheminé, sous forme gazeuse, à travers un conduit de gaz 12 vers une zone d'ionisation 13. Pour obtenir la forme gazeuse lorsque le mélange dans le réservoir 11 est solide ou liquide, le réservoir peut, par exemple, être chauffé.

La zone d'ionisation 13 est de manière générale mise en œuvre par une chambre sous vide 18 dans laquelle le gaz est introduit.

Le faisceau lumineux 14 émis par le laser 10 est dirigé vers et focalisé dans la zone d'ionisation 13 à l'aide de moyens de formation de faisceau connus, tels que des miroirs et des lentilles, représentés par la référence 15 dans la Figure 1.

Le système 1 selon l'invention comprend en outre un modulateur de polarisation 16. Le modulateur de polarisation 16 est agencé pour polariser le rayonnement laser 14 elliptiquement et pour varier l'ellipticité de la polarisation de manière continue en fonction du temps.

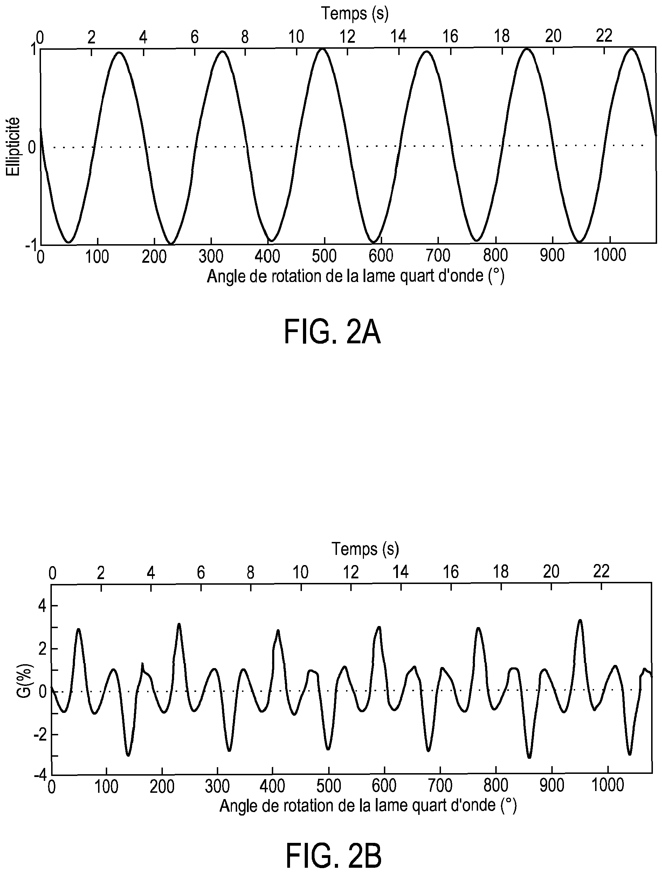

Selon un mode de réalisation avantageux, le modulateur de polarisation est une lame quart d'onde 16 mise en rotation autour de l'axe z de propagation du rayonnement laser. Lorsqu'un faisceau polarisé linéairement traverse la lame quart d'onde 16, sa polarisation résultante après la lame 16 est linéaire, circulaire ou elliptique, gauche ou droite, en fonction de l'orientation des axes rapide et lent de la lame par rapport à la polarisation linéaire incidente. Lorsque la lame quart d'onde 16 est mise en rotation de manière continue autour de l'axe z de propagation (correspondant à l'axe principale de la lame 16), l'ellipticité de la polarisation résultante varie en fonction du temps entre circulaire gauche - elliptique gauche - linéaire - elliptique droite - circulaire droite. La Figure 2A montre un exemple de l'évolution temporelle de l'ellipticité de la polarisation pour une lame quart d'onde tournant de 45° par seconde. Cette évolution a une forme sinusoïdale.

La mise en rotation de la lame quart d'onde peut être réalisée par tout moyen connu de l'homme du métier, notamment à l'aide d'un support de lame motorisé.

Selon un exemple de réalisation, le système 1 selon l'invention peut également comprendre un modulateur de l'intensité (ou de l'énergie, non représenté) du faisceau laser. Ce modulateur peut être, par exemple, un atténuateur constitué d'une lame demi-onde et d'un polariseur fixe. La rotation continue de la lame demi-onde permet une modulation périodique de l'énergie du laser. La fréquence de la modulation de l'intensité peut être inférieure à celle de la modulation de l'ellipticité de la polarisation. Par exemple, la période de modulation de l'ellipticité peut être de 1 seconde, et celle de la modulation de l'intensité de 20 secondes.

Selon un autre exemple de réalisation, le système 1 selon l'invention peut également comprendre un modulateur de la durée des impulsions laser (non représenté). Par exemple, dans le cas d'un laser à amplification par dérive de fréquence comprenant un compresseur à réseaux, la modulation peut être réalisé en faisant varier la distance entre les réseaux du compresseur à l'aide d'un moyen mécanique de translation.

Selon encore un autre exemple de réalisation, le système 1 selon l'invention peut comprendre un modulateur de la longueur d'onde de la source de rayonnement électromagnétique. Dans le cas d'une source laser pulsée, il est par exemple possible de moduler la longueur d'onde de manière fine en variant l'orientation d'un cristal doubleur, ou de manière forte en utilisant un dispositif de conversion de fréquence type amplificateur paramétrique optique.

Lorsque le rayonnement laser interagit avec les molécules présentes dans la zone d'ionisation, les molécules sont ionisées en éjectant des électrons. De préférence, au moins une molécule est ionisée par impulsion laser. Les électrons sont émis dans différentes directions. En raison de la chiralité des molécules, la distribution angulaire et/ou spatiale des électrons émis est asymétrique, ce qui signifie que plus d'électrons sont émis en avant qu'en arrière, ou plus d'électrons sont émis en arrière qu'en avant. Cette asymétrie est présente pour les polarisations circulaires et elliptiques du laser. Lorsque la polarisation du rayonnement est linéaire, l'asymétrie disparaît.

Toujours en référence à la Figure 1, le système 1 selon l'invention comprend en outre des moyens de détection d'électrons agencés pour détecter les électrons, ou photoélectrons, produits par l'ionisation des molécules et émis en avant et en arrière de la zone d'ionisation 13 par rapport à l'axe z de propagation de la lumière. Dans l'exemple de réalisation représenté, ces moyens de détection sont symbolisés par des plaques 17a, 17b positionnées an avant et en arrière de la zone d'ionisation 13.

Des moyens de détection d'électrons incluent, par exemple, un spectromètre imageur de vitesses des électrons (*velocity map imaging (VMI) spectrometer* en langue anglaise). Un tel spectromètre VMI image et convertit la distribution angulaire et/ou spatiale électronique en signal optique qui peut être mesuré par une caméra.

D'autres détecteurs d'électrons sont, par exemple, des détecteurs mesurant directement le nombre d'électrons émis vers l'avant et vers l'arrière en les guidant grâce à un champ magnétique sur deux détecteurs.

Le système 1 selon l'invention comprend également un dispositif (non représenté) de détermination, tel qu'un ordinateur. Ce dispositif est notamment agencé pour effectuer la détermination de la chiralité des molécules à partir de la distribution spatiale ou angulaire d'électrons détectée de manière continue en fonction du temps. D'autres opérations d'analyse peuvent être effectuées par ce dispositif, comme il sera détaillé ci-dessous.

Par la suite, des exemples de réalisation d'un procédé de mesure selon l'invention vont être décrits en référence aux Figures 1 à 5, mis en œuvre par le système selon le mode de réalisation décrit ci-dessus.

Un échantillon gazeux de molécules est introduit dans la zone d'ionisation 13. L'échantillon peut contenir des molécules d'une seule ou de plusieurs espèces chimiques. Les molécules sont ionisées dans la zone d'ionisation 13 par le rayonnement laser 14, par ionisation multi-photonique résonante. Le faisceau laser 14 est polarisé elliptiquement par la lame quart d'onde 16 tournante de sorte que l'ellipticité varie de manière continue en fonction du temps. La Figure 2A montre l'évolution temporelle de l'ellipticité de la polarisation pour la lame quart d'onde tournant de 45°/s.

Les photoélectrons émis par l'ionisation sont détectés, notamment leur nombre et/ou leur distribution angulaire ou spatiale vers l'avant et vers l'arrière de la zone d'ionisation par rapport à l'axe de propagation z. Ceci permet notamment de mesurer l'asymétrie avant-arrière de la distribution de photoélectrons en fonction de l'ellipticité de polarisation du rayonnement. La distribution angulaire peut, par exemple, être mesurée avec un spectromètre VMI.

L'évolution du signal mesuré présente une périodicité : le signal est le même à chaque demi-tour de la lame quart d'onde, en correspondance avec l'ellipticité de polarisation qui est également la même à chaque demi-tour de la lame (voir Figure 2A). Cette périodicité permet une analyse simple du signal, par exemple par transformée de Fourier. Le signal est mesuré « à la volée », c'est à dire qu'il est moyenné pendant un temps d'exposition Δt et est mesuré sans temps mort tous les Δt. Le temps d'exposition Δt est choisi de manière à obtenir un bon niveau de signal. La vitesse de rotation de la lame quart d'onde 16 doit être ajustée en conséquence afin d'échantillonner correctement les oscillations du signal. Selon un exemple, pour la lame tournant à 45°/s, le temps d'exposition Δt = 50 ms. D'autres temps d'exposition et d'autres vitesses de rotation de la lame peuvent bien sûr être choisis.

Afin de pouvoir déterminer la chiralité des molécules de l'échantillon, le nombre d'électrons émis vers l'avant *F* est comparé au nombre d'électrons émis vers l'arrière B, en fonction du temps. On obtient une fonction d'asymétrie G(t) définie comme suit : G = 4(F-B)/(F+B). L'évolution de cette fonction G(t) en fonction de la rotation de la lame quart d'onde (représentée sur la Figure 2A) est présenté sur la Figure 2B.

On observe, sur la Figure 2B, que l'asymétrie G(t) présente une structure temporelle complexe et non sinusoïdale. Cela signifie que l'évolution de l'asymétrie avant-arrière n'est pas monotone avec l'ellipticité de polarisation du laser, mais peut même changer de signe. Cet effet est dû à la nature résonante de l'ionisation multi-photonique par le laser.

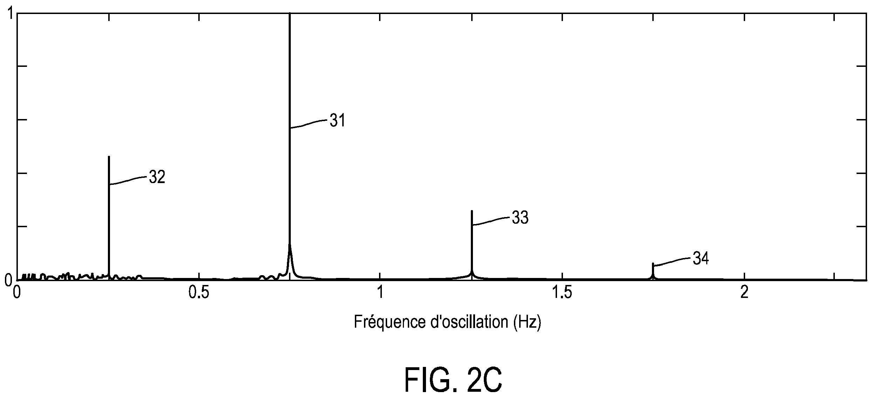

L'analyse de Fourier de la fonction d'asymétrie G(t) consiste en la décomposition de la fonction par transformée de Fourier, permettant d'obtenir son spectre en fonction de la fréquence d'oscillation. Le spectre fréquentiel de la fonction G de la Figure 2B est présenté sur la Figure 2C. Ce spectre fréquentiel montre une série de pics 31 à 34 reflétant la non-linéarité de la réponse, c'est-à-dire de l'évolution temporelle de l'asymétrie dans la distribution d'électrons, à l'ellipticité du laser.

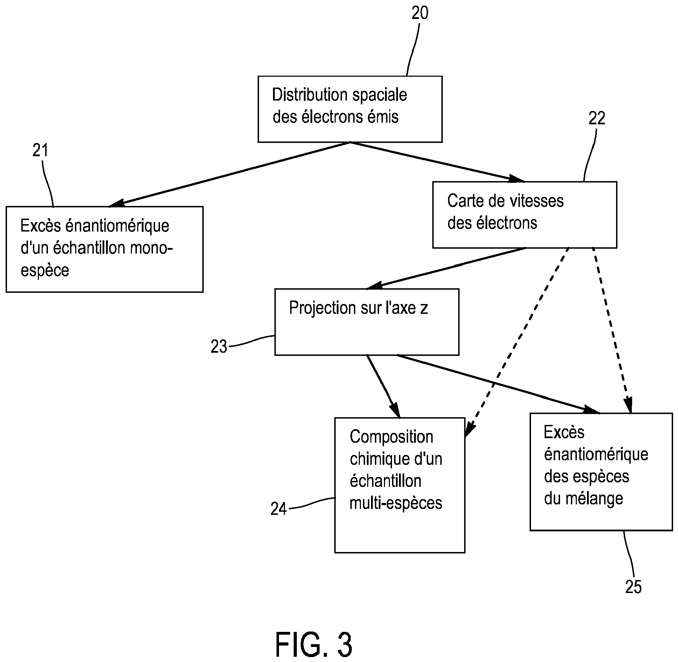

La décomposition par transformée de Fourier peut être employée de plusieurs manières. Ces possibilités sont résumées sur la Figure 3.

A partir de la distribution spatiale (ou angulaire) 20 des électrons, on peut directement accéder à l'excès énantiomérique 21 d'un échantillon mono-espèce. Il est également possible de générer une carte de vitesses 22 comme indiqué ci-dessus. La carte de vitesses 22 peut ensuite être analysé d'au moins deux manières. Premièrement, la projection 23 sur l'axe z de propagation permet de déterminer la composition chimique 24 ainsi que l'excès énantiomérique 25 d'un échantillon multi-espèces (analyse en une dimension). Deuxièmement, la composition chimique 24 ainsi que l'excès énantiomérique 25 d'un échantillon multi-espèces peuvent être peuvent être déterminés directement à partir de la carte de vitesses 22 sans passer par la projection 23 (analyse en deux dimensions, représentée par les flèches en pointillés).

Les différents exemples de mesure et d'analyse seront détaillés par la suite.

Mesure directe de l'excès énantiomérique d'un échantillon mono-espèce

En référence à la Figure 2C, l'amplitude du pic principal 31 $I_{pic}$ de la transformée de Fourier permet la mesure directe de l'excès énantiomérique d'un échantillon mono-espèce, après calibration par un composé énantiomériquement pur, dont le pic principal de la transformée de Fourier a l'amplitude $I_{pic}^{ref}$. L'excès énantiomérique *ee* est défini comme suit :

$$ee = ([R]\text{-}[S])/([R]\text{+}[S]),$$

où [R] et [S] sont les concentrations des deux énantiomères présents dans l'échantillon. Il est directement fourni par l'analyse par transformée de Fourier :

$$ee = I_{pic} / I_{pic}^{ref}.$$

Ainsi, en utilisant une source laser de haute cadence, tel qu'un laser femto-seconde fibré, il est possible d'effectuer une mesure de l'excès énantiomérique précise très rapidement.

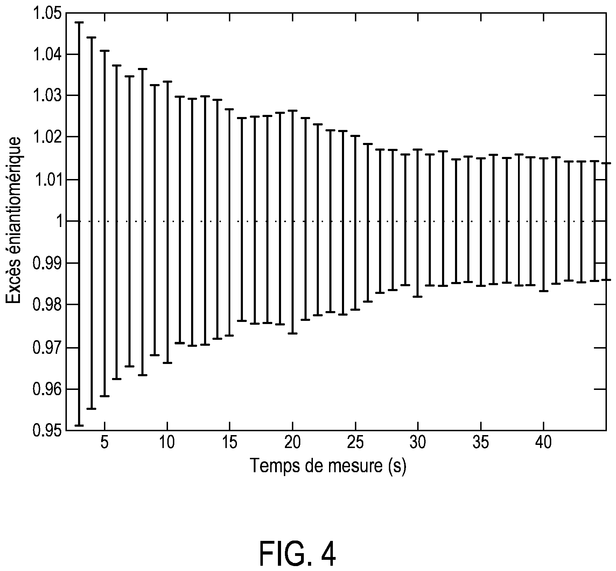

La Figure 4 présente la précision de la mesure d'*ee* (intervalle de confiance à 95%) en fonction de la durée de la mesure. On observe qu'une précision de l'ordre de 5 % est atteinte en environ 3 secondes de mesure. Il est possible d'atteindre une meilleure précision en répétant les mesures, c'est à dire en faisant une acquisition plus longue et en découpant le signal à analyser en tranches successives de 3 secondes. C'est le principe d'une analyse de Gabor du signal qui consiste en des transformées de Fourier locales dans des fenêtres temporelles d'analyse. L'ensemble de ces transformées de Fourier ainsi localisées forme la transformée de Gabor du signal, qui fournit alors un spectre fréquentiel local.

Une analyse statistique de 120 mesures de 5 secondes (soit 10 minutes d'acquisition totale) est résumée dans le tableau 1 ci-dessous. Cette analyse statistique donne une précision de 0,4 % (colonne de droite). Le tableau 1 présente la caractérisation de plusieurs mélanges énantiomériques par la technique selon la présente invention, en comparaison des données fournies par le fabricant des mélanges. La comparaison démontre un très bon accord entre les prévisions théoriques du fabricant et les résultats obtenus avec le procédé de l'invention. Cette précision est atteinte grâce à la variation continue de l'ellipticité de polarisation du rayonnement laser et à l'acquisition à la volée. Comme indiqué ci-dessus, tout le temps de mesure est utile pour échantillonner l'oscillation du signal de la distribution des électrons. L'analyse de Fourier filtre le bruit en ne se reproduisant que la partie oscillante du signal.

*tableau 1*

| Mélange | Excès énantiomérique du fabricant | Excès énantiomérique mesuré |
|---|---|---|
| 1 | -84,2 $\pm$ 4 % | 84,0 $\pm$ 0,4 % |
| 2 | 63,1 $\pm$ 4 % | 62,7 $\pm$ 0,5 % |
| 3 | 25,1 $\pm$ 4 % | 24,9 $\pm$ 0,4 % |

Suivi en temps réel de la composition énantiomérique d'un échantillon mono-espèce

La possibilité d'effectuer la détermination rapide et précise de l'excès énantiomérique permet d'effectuer le suivi en temps réel de la composition énantiomérique d'un échantillon. Pour cela, le signal mesuré est découpé en tranches temporelles et une analyse de Fourier est réalisée sur chaque tranche (représentant une analyse de Gabor). La durée de chaque tranche détermine la précision de chaque mesure et la résolution temporelle du suivi.

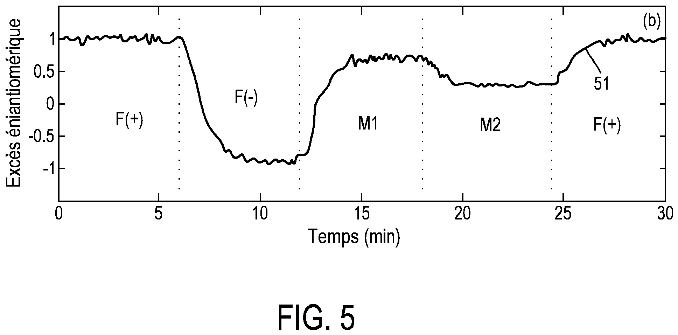

La Figure 5 présente les résultats obtenus par cette méthode pour des échantillons de fenchone comprenant des molécules de deux chiralités opposées (+) et (-). L'excès énantiomérique mesuré 51 y est présenté pour des échantillons de fenchone énantiomériquement purs F(+), F(-) ou de mélanges M1, M2 de ceux-ci, en fonction du temps. Le passage d'un échantillon à l'autre est réalisé en fermant et en ouvrant des fioles correspondantes contenant les différents composés liquides chauffés. Le passage d'un échantillon à l'autre prend plusieurs minutes du fait du chemin à parcourir par l'échantillon entre les fioles et la zone d'ionisation. La mesure permet de suivre la composition énantiomérique d'un échantillon en temps réel, avec une grande précision.

Mesure d'excès énantiomérique dans un échantillon multi-espèces

L'évolution du signal asymétrique G(t) en fonction de l'ellipticité de polarisation dépend de l'espèce chimique considéré. Du point de vue de l'analyse de Fourier (voir l'exemple de la Figure 2C), cela signifie que les amplitudes et les phases des différents pics du spectre fréquentiel sont caractéristiques de l'espèce moléculaire ionisée, et peuvent alors être utilisées pour faire une analyse énantiomérique d'un mélange de plusieurs espèces chimiques. Pour caractériser un mélange multi-espèces complètement, il faut également connaître le poids relatif des différentes espèces dans le signal mesuré et l'excès énantiomérique de chaque espèce.

Pour connaître la contribution relative des différentes espèces, il est possible d'exploiter le fait que l'ionisation résonante de différentes espèces moléculaires produit des photoélectrons dont les distributions de vitesses sont différentes. En mesurant l'évolution de la carte de vitesses (par exemple avec le spectromètre VMI) en fonction de l'ellipticité de polarisation du rayonnement laser, on obtient une signature différente pour différentes espèces moléculaires ionisées. Pour simplifier l'analyse de l'évolution de la carte de vitesses, il est possible de se restreindre à une étude unidimensionnelle, en considérant la projection P(z,t) de la carte de vitesses sur l'axe de propagation z du laser. Cette projection peut être effectuée numériquement à partir de l'image 2D de la carte de vitesses mesurées sur un VMI. Alternativement, la projection peut être mesurée directement avec un détecteur dédié.

Les projections obtenues P(z,t) oscillent en fonction de l'ellipticité de polarisation du laser et du temps. Pour déterminer la contribution des différentes espèces, la projection est symétrisée comme suit : $P^{sym}(z,t) = (P(z,t) + P(-z,t))/2$. Une analyse de Fourier de l'évolution de chaque point z est effectuée pour obtenir $P^{sym}(z,\Omega)$, où $\Omega$ est la fréquence de l'oscillation. Selon la réponse de l'espèce moléculaire considérée à l'ellipticité de polarisation, la transformée de Fourier présente différents pics aux fréquences $\Omega_1$, $\Omega_2$, etc. Une base comprenant les valeurs complexes de la transformée de Fourier résolue spatialement est établie : $P^{sym}(z, \Omega_1)$, $P^{sym}(z, \Omega_2)$, etc.

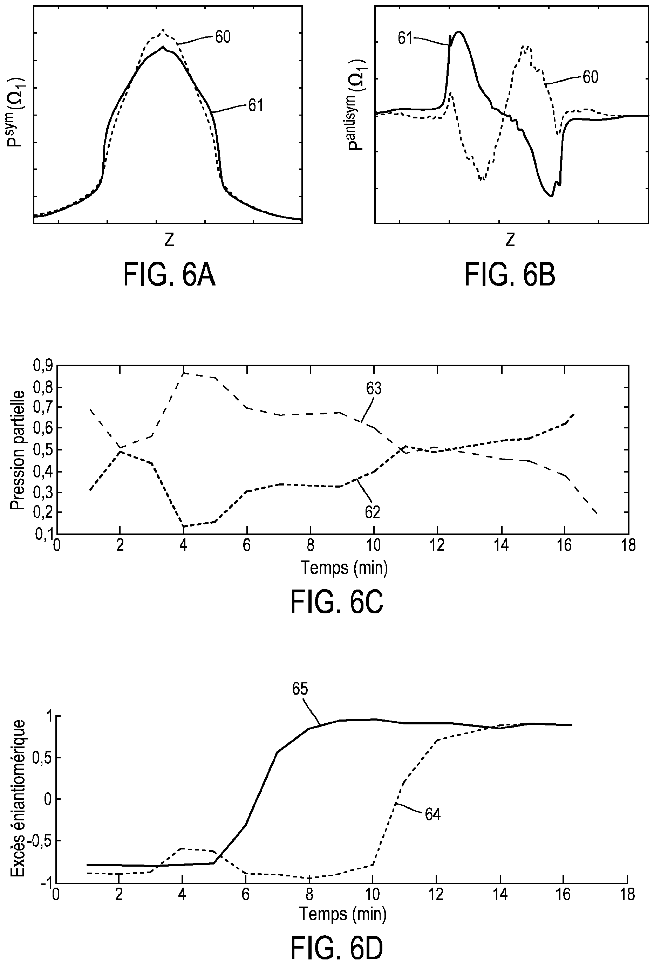

Le Figure 6A présente un exemple de projection symétrique $P^{sym}(\Omega_1)$ sur l'axe z pour les composés camphre 60 et fenchone 61. Ces espèces ont la même masse et des potentiels d'ionisation très proches. La Figure 6A montre que la distribution des vitesses est néanmoins différente.

Ce processus est répété pour les différentes espèces moléculaires pures que l'on aura à identifier dans le mélange inconnu. Le mélange peut comprendre deux composés ou plus. On obtient alors une série $P_A^{sym}(z, \Omega_1)$, $P_A^{sym}(z, \Omega_2)$, ..., $P_B^{sym}(z, \Omega_1)$, $P_B^{sym}(z, \Omega_2)$, ..., etc., où A et B désignent les espèces (pour un mélange à deux espèces A et B).

Lors d'une mesure d'une carte de vitesses d'un mélange inconnu, les projections symétriques $P_{mix}^{sym}(z, \Omega_1)$, $P_{mix}^{sym}(z, \Omega_2)$, etc. sont obtenues. Un algorithme des moindres carrés (ou une autre procédure d'ajustement) est alors employé pour minimiser la fonction suivante :

$$f = |\ P_{mix}^{sym}(z, \Omega_1) - a*\ P_A^{sym}(z, \Omega_1) - (1 - a)*\ P_B^{sym}(z, \Omega_1)|^2$$

$$+\ \alpha\ |\ P_{mix}^{sym}(z, \Omega_2) - a*\ P_A^{sym}(z, \Omega_2) - (1 - a)*\ P_B^{sym}(z, \Omega_2)|^2 + ...,$$

où a est choisi de manière à équilibrer le poids relatif des contributions des différents pics du spectre de Fourier.

Cette procédure permet de déterminer le coefficient a, qui donne le poids relatif des contributions des différentes espèces au signal détecté. Ce poids permet de déduire les pressions partielles des espèces si les différentes mesures sur les échantillons mono- et multi-espèces sont effectuées à la même pression totale.

La mesure des poids relatifs est habituellement effectuée par spectrométrie de masse, en coïncidence avec la détection des électrons. Cependant, cette technique conventionnelle limite considérablement la durée d'acquisition et ne permet pas de distinguer des espèces de même masse. Or, la procédure décrite ci-dessus permet de distinguer deux espèces de même masse, comme le camphre et la fenchone.

Pour connaître l'excès énantiomérique de chaque espèce, une fois le poids relatif de chaque espèce du mélange déterminé, une procédure similaire à celle décrite ci-dessus pour la partie symétrique de la distribution des vitesses est appliquée à la partie antisymétrique :

$$P^{antisym}(z,t) = (P(z,t)-P(-z,t))/2,$$

qui présente des pics de Fourier aux fréquences $\Omega'_1$, $\Omega'_2$, etc.

La Figure 6B présente un exemple de projection antisymétrique $P^{antisym}(\Omega_1)$ sur l'axe z pour les composés camphre 60 et fenchone 61. La contribution antisymétrique de la distribution des vitesses est clairement différente pour les deux espèces.

La fonction suivante est minimisée :

$$g = |P_{mix}^{antisym}(z, \Omega'_1) - a*ee_A*\ P_A^{antisym}(z, \Omega'_1) - (1-a)*ee_B*\ P_B^{antisym}(z, \Omega'_1)|^2$$

$$+\ \alpha\ |P_{mix}^{antisym}(z, \Omega'_2)-a*ee_A*P_A^{antisym}(z, \Omega'_2) - (1-a)*ee_B*\ P_B^{antisym}(z, \Omega'_2)|^2 + ...,$$

de manière similaire que la fonction f pour la partie symétrique.

Nous obtenons ainsi l'excès énantiomérique de chaque espèce, eeA et eeB.

La méthode décrite ci-dessus pour l'analyse d'un échantillon multi-espèces peut également être associée à une analyse de Gabor pour effectuer le suivi en temps réel de la composition d'un mélange, tant du point de vue des espèces chimiques que de leur composition énantiomérique.

La Figure 6C représente l'évolution temporelle de la pression partielle de camphre 62 et fenchone 63 lorsque l'on ouvre et ferme des fioles les contenant, modifiant leurs proportions relatives.

La Figure 6D représente l'évolution temporelle de l'excès énantiomérique de camphre 64 et fenchone 65, respectivement, lorsque l'on passe d'un échantillon (-) à un échantillon (+) en ouvrant et fermant des fioles les contenant.

La projection de la distribution de vitesses sur l'axe z vise à réduire la dimensionnalité du problème et à alléger le traitement des données. Cependant, l'analyse d'un échantillon multi-espèces peut également être effectué en utilisant une carte bidimensionnelle de la distribution de vitesses.

Lorsque, en plus de la modulation de la polarisation, d'autres paramètres du rayonnement électromagnétique sont modulés temporellement, par exemple l'énergie (ou l'intensité), la longueur d'onde ou la durée des impulsions laser, l'évolution temporelle de la distribution d'électrons est différente de, ou enrichie par rapport à, celle représentée sur la Figure 2B, où seulement l'ellipticité de la polarisation est modulée. Dans le spectre de Fourier d'une telle distribution d'électrons enrichie, le nombre de composantes présentes est augmenté par rapport à une distribution où seulement l'ellipticité de la polarisation est modulée, tel que représenté sur la Figure 2C. Ce plus grand nombre de composantes permet alors des analyses plus fines de l'excès énantiomérique ainsi que de son suivi en temps réel.

Bien sûr, l'invention n'est pas limitée aux exemples qui viennent d'être décrits, mais seulement par la portée des revendications.

## Revendications

1. Procédé de mesure de la chiralité de molécules dans un échantillon de molécules chirales, l'échantillon comprenant au moins une espèce chimique, le procédé comprenant les étapes suivantes :

- introduction de l'échantillon de molécules chirales dans une zone d'ionisation (13) ;
- ionisation des molécules au moyen d'un rayonnement électromagnétique (14) dans la zone d'ionisation (13) ; et
- détection d'une distribution d'électrons produits par l'ionisation et émis en avant et en arrière de la zone d'ionisation (13) par rapport à l'axe, z, de propagation du rayonnement électromagnétique (14) ;

**caractérisé en ce que** le rayonnement électromagnétique (14) est polarisé elliptiquement, l'ellipticité de polarisation du rayonnement variant de manière continue et périodique en fonction du temps, le procédé étant **caractérisé en outre en ce qu'**il comprend une étape de :

- détermination de la chiralité des molécules à partir de la distribution d'électrons détectée de manière continue en fonction du temps.

2. Procédé selon la revendication 1, **caractérisé en ce que** l'étape de détermination de la chiralité est réalisée en temps réel.

3. Procédé selon la revendication 1 ou 2, **caractérisé en ce que** l'étape de détection est effectuée par des mesures du nombre d'électrons, émis en avant et en arrière de la zone d'ionisation (13) par rapport à l'axe, z, de propagation du rayonnement électromagnétique (14), à des instants $t_i$ (i = 1, 2, ...), le nombre mesuré étant intégré pendant un intervalle $\Delta t = (t_i - t_{i-1})$ pour chaque mesure.

4. Procédé selon l'une quelconque des revendications précédentes, **caractérisé en ce que** l'étape de détermination de la chiralité des molécules comprend une étape de comparaison d'un nombre d'électrons détectés en avant et d'un nombre d'électrons détectés en arrière de la zone d'ionisation (13) par rapport à l'axe, z, de propagation du rayonnement électromagnétique (14).

5. Procédé selon l'une quelconque des revendications précédentes, **caractérisé en ce qu'**il comprend en outre une étape d'analyse de Fourier d'une évolution temporelle de la distribution d'électrons pour obtenir le spectre fréquentiel de la distribution.

6. Procédé selon la revendication 5, **caractérisé en ce que**, pour un échantillon de molécules mono-espèce, le procédé comprend en outre une étape de détermination d'un excès énantiomérique à partir du spectre fréquentiel de la distribution d'électrons.

7. Procédé selon l'une quelconque des revendications précédentes, **caractérisé en ce qu'**il comprend en outre une étape de génération d'une carte de distribution spatiale et/ou angulaire P(x,t) des électrons émis à partir de la distribution des électrons en fonction du temps t, où x est la position des électrons sur la carte.

8. Procédé selon la revendication 7, **caractérisé en ce qu'**il comprend en outre une étape d'analyse de Fourier de chaque composante de la carte de distribution.

9. Procédé selon la revendication 7, **caractérisé en ce qu'**il comprend en outre les étapes suivantes :

- détermination de la projection P(z,t) de la carte de distribution P(x,t) sur l'axe de propagation, z, du rayonnement électromagnétique ; et
- analyse de Fourier de l'évolution temporelle de la projection P(z,t) pour obtenir le spectre fréquentiel.

10. Procédé selon la revendication 9, **caractérisé en ce que**, pour un échantillon de molécules multi-espèces, le procédé comprend en outre une étape de détermination des espèces de l'échantillon à partir du spectre fréquentiel de la projection P(z,t) de la carte de distribution.

11. Procédé selon la revendication 9 ou 10, **caractérisé en ce que** le procédé comprend en outre une étape de détermination de l'excès énantiomérique à partir du spectre fréquentiel de la projection P(z,t) de la carte de distribution des électrons.

12. Système (1) de mesure de la chiralité, comprenant :

- une zone d'ionisation (13) agencée pour recevoir un échantillon de molécules chirales comprenant au moins une espèce chimique ;

- une source de rayonnement électromagnétique (10) agencée pour émettre un rayonnement électromagnétique (14) et ioniser les molécules chirales dans la zone d'ionisation (13) par le rayonnement électromagnétique ; et
- des moyens de détection d'électrons (17a, 17b) agencés pour détecter une distribution d'électrons produits par l'ionisation et émis en avant et en arrière de la zone d'ionisation (13) par rapport à l'axe, z, de propagation de la rayonnement électromagnétique (14) ;

**caractérisé en ce que** le système (1) comprend en outre :

- un modulateur de polarisation (16) agencé pour polariser le rayonnement électromagnétique (14) elliptiquement et agencé pour faire varier l'ellipticité de polarisation du rayonnement (14) de manière continue en fonction du temps ; et
- un dispositif de détermination agencé et/ou programmé pour déterminer la chiralité des molécules à partir de la distribution d'électrons détectée de manière continue en fonction du temps.

13. Système (1) selon la revendication 12, **caractérisé en ce que** les moyens de détection d'électrons (17a, 17b) comprennent au moins un d'un détecteur d'asymétrie d'éjection à champ magnétique et d'un spectromètre pour l'imagerie de cartes de vitesses.

14. Système (1) selon la revendication 12 ou 13, **caractérisé en ce que** la source de rayonnement électromagnétique (10) est une source laser.

15. Système (1) selon la revendication 14, **caractérisé en ce que** la source laser (10) est une source laser pulsée femto-secondes.

16. Système (1) selon l'une quelconque des revendications 12 à 15, **caractérisé en ce qu'**il comprend en outre un détecteur d'ions agencé pour détecter les molécules ionisées.

17. Système (1) selon la revendication 16, **caractérisé en ce que** le détecteur d'ions est un spectromètre de masse.

18. Système (1) selon l'une quelconque des revendications 12 à 17, **caractérisé en ce que** le modulateur de polarisation (16) comprend une lame quart d'onde agencée pour être mise en rotation autour de l'axe, z, de propagation du rayonnement.

19. Système (1) selon l'une quelconque des revendications 12 à 18, **caractérisé en ce qu'**il comprend en outre un modulateur d'intensité du rayonnement électromagnétique et/ou un modulateur de la longueur d'onde du rayonnement électromagnétique.

20. Système (1) selon l'une quelconque des revendications 15 à 19, **caractérisé en ce qu'**il comprend en outre un modulateur de la durée des impulsions de la source laser (10).

21. Système (1) selon l'une quelconque des revendications 12 à 20, **caractérisé en ce qu'**il est agencé pour mettre en œuvre le procédé selon l'une des revendications 1 à 11.

**Patentansprüche**

1. Verfahren zur Messung der Chiralität von Molekülen in einer Probe chiraler Moleküle, wobei die Probe mindestens eine chemische Spezies umfasst, wobei das Verfahren die folgenden Schritte umfasst:

- Einbringung der Probe chiraler Moleküle in eine Ionisierungszone (13);
- Ionisierung der Moleküle mittels elektromagnetischer Strahlung (14) in der Ionisierungszone (13); und
- Detektion einer Verteilung von Elektronen, die durch die Ionisierung erzeugt und vor und hinter der Ionisierungszone (13) in Bezug auf die Achse z der Ausbreitung der elektromagnetischen Strahlung (14) emittiert werden;

**dadurch gekennzeichnet, dass** die elektromagnetische Strahlung (14) elliptisch polarisiert ist, wobei die Elliptizität der Polarisation der Strahlung kontinuierlich und periodisch als Funktion der Zeit variiert, wobei das Verfahren ferner **dadurch gekennzeichnet ist, dass** es einen Schritt umfasst zur:

- Bestimmung der Chiralität von Molekülen aus der kontinuierlich als Funktion der Zeit detektierten Elektronenverteilung.

2. Verfahren nach Anspruch 1, **dadurch gekennzeichnet, dass** der Schritt der Bestimmung der Chiralität in Echtzeit durchgeführt wird.

3. Verfahren nach Anspruch 1 oder 2, **dadurch gekennzeichnet, dass** der Detektionsschritt durch Messungen der Anzahl von Elektronen, die vor und hinter der Ionisierungszone (13) in Bezug auf die Achse, z, der Ausbreitung der elektromagnetischen Strahlung (14) emittiert werden, zu Zeitpunkten $t_i$ (i = 1, 2, ...) durchgeführt wird, wobei für jede Messung die gemessene Anzahl während eines Intervalls $\Delta t = (t_i - t_{i-1})$ integriert wird.

4. Verfahren nach einem der vorhergehenden Ansprüche, **dadurch gekennzeichnet, dass** der Schritt der Bestimmung der Chiralität von Molekülen einen Schritt des Vergleichs einer Anzahl von Elektronen, die vor und einer Anzahl von Elektronen, die hinter der Ionisierungszone (13) in Bezug auf die Achse, z, der Ausbreitung der elektromagnetischen Strahlung (14) detektiert werden, umfasst.

5. Verfahren nach einem der vorhergehenden Ansprüche, **dadurch gekennzeichnet, dass** es ferner einen Schritt der Fourier-Analyse einer zeitlichen Entwicklung der Elektronenverteilung umfasst, um das Frequenzspektrum der Verteilung zu erhalten.

6. Verfahren nach Anspruch 5, **dadurch gekennzeichnet, dass** das Verfahren für eine Probe von Monospezies-Molekülen ferner einen Schritt der Bestimmung eines Enantiomerenüberschusses aus dem Frequenzspektrum der Elektronenverteilung umfasst.

7. Verfahren nach einem der vorhergehenden Ansprüche, **dadurch gekennzeichnet, dass** es ferner einen Schritt zur Erzeugung einer Karte der räumlichen und/oder winkelmäßigen Verteilung P(x,t) von emittierten Elektronen aus der Verteilung der Elektronen als Funktion der Zeit t umfasst, wobei x die Position von Elektronen in der Karte ist.

8. Verfahren nach Anspruch 7, **dadurch gekennzeichnet, dass** es ferner einen Schritt der Fourier-Analyse jeder Komponente der Verteilungskarte umfasst.

9. Verfahren nach Anspruch 7, **dadurch gekennzeichnet, dass** es ferner die folgenden Schritte umfasst:

- Bestimmung der Projektion P(z,t) der Verteilungskarte P(x,t) auf die Achse der Ausbreitung, z, der elektromagnetischen Strahlung; und
- Fourier-Analyse der zeitlichen Entwicklung der Projektion P(z,t), um das Frequenzspektrum zu erhalten.

10. Verfahren nach Anspruch 9, **dadurch gekennzeichnet, dass** das Verfahren für eine Probe von Multispezies-Molekülen ferner einen Schritt der Bestimmung von Spezies der Probe aus dem Frequenzspektrum der Projektion P(z,t) der Verteilungskarte umfasst.

11. Verfahren nach Anspruch 9 oder 10, **dadurch gekennzeichnet, dass** das Verfahren ferner einen Schritt der Bestimmung des Enantiomerenüberschusses aus dem Frequenzspektrum der Projektion P(z,t) der Elektronenverteilungskarte umfasst.

12. System (1) zur Messung der Chiralität, umfassend:

- eine Ionisierungszone (13), die dazu eingerichtet ist, eine Probe von chiralen Molekülen aufzunehmen, die mindestens eine chemische Spezies umfasst;
- eine Quelle für elektromagnetische Strahlung (10), die dazu eingerichtet ist, elektromagnetische Strahlung (14) zu emittieren und die chiralen Moleküle in der Ionisierungszone (13) durch die elektromagnetische Strahlung zu ionisieren; und
- Elektronendetektionsmittel (17a, 17b), die dazu eingerichtet sind, eine Verteilung von Elektronen zu detektieren, die durch die Ionisation erzeugt und vor und hinter der Ionisierungszone (13) in Bezug auf die Achse, z, der Ausbreitung der elektromagnetischen Strahlung (14) emittiert werden;

**dadurch gekennzeichnet, dass** das System (1) ferner umfasst:

- einen Polarisationsmodulator (16), der dazu eingerichtet ist, die elektromagnetische Strahlung (14) elliptisch zu polarisieren, und dazu eingerichtet ist, die Elliptizität der Polarisation der Strahlung (14) kontinuierlich als Funktion der Zeit zu variieren; und

- eine Bestimmungseinrichtung, die dazu eingerichtet und/oder programmiert ist, die Chiralität von Molekülen aus der kontinuierlich als Funktion der Zeit detektierten Elektronenverteilung zu bestimmen.

13. System (1) nach Anspruch 12, **dadurch gekennzeichnet, dass** die Elektronendetektionsmittel (17a, 17b) mindestens einen Magnetfeld-Emissionsasymmetrie-Detektor und ein Spektrometer für die Erstellung von Geschwindigkeitskarten umfassen.

14. System (1) nach Anspruch 12 oder 13, **dadurch gekennzeichnet, dass** die Quelle für elektromagnetische Strahlung (10) eine Laserquelle ist.

15. System (1) nach Anspruch 14, **dadurch gekennzeichnet, dass** die Laserquelle (10) eine gepulste Femtosekunden-Laserquelle ist.

16. System (1) nach einem der Ansprüche 12 bis 15, **dadurch gekennzeichnet, dass** es ferner einen Ionendetektor umfasst, der dazu eingerichtet ist, die ionisierten Moleküle zu detektieren.

17. System (1) nach Anspruch 16, **dadurch gekennzeichnet, dass** der Ionendetektor ein Massenspektrometer ist.

18. System (1) nach einem der Ansprüche 12 bis 17, **dadurch gekennzeichnet, dass** der Polarisationsmodulator (16) eine Viertelwellenplatte umfasst, die dazu eingerichtet ist, um die Achse, z, der Ausbreitung der Strahlung gedreht zu werden.

19. System (1) nach einem der Ansprüche 12 bis 18, **dadurch gekennzeichnet, dass** es ferner einen Modulator für die Intensität der elektromagnetischen Strahlung und/oder einen Modulator für die Wellenlänge der elektromagnetischen Strahlung umfasst.

20. System (1) nach einem der Ansprüche 15 bis 19, **dadurch gekennzeichnet, dass** es ferner einen Modulator für die Dauer der Pulse der Laserquelle (10) umfasst.

21. System (1) nach einem der Ansprüche 12 bis 20, **dadurch gekennzeichnet, dass** es zur Durchführung des Verfahrens nach einem der Ansprüche 1 bis 11 eingerichtet ist.

## Claims

1. Method for measuring the chirality of molecules in a sample of chiral molecules, the sample comprising at least one chemical species, wherein the method comprises the following steps:

- introducing the sample of chiral molecules into an ionization area (13);
- ionizing the molecules by means of an electromagnetic radiation (14) in the ionization area (13); and
- detecting a distribution of electrons produced by the ionization and emitted to the front and to the back of the ionization area (13) with respect to the axis, $z$, of propagation of the electromagnetic radiation (14);

**characterized in that** the electromagnetic radiation (14) is elliptically polarized, wherein the polarization ellipticity of the radiation varies continuously and periodically as a function of time, wherein the method is moreover **characterized in that** it comprises a step of:

- determining the chirality of the molecules from the electron distribution detected continuously as a function of time.

2. Method according to claim 1, **characterized in that** the step of determining the chirality is performed in real time.

3. Method according to claim 1 or 2, **characterized in that** the detection step is carried out through measurements of the number of electrons, emitted to the front and to the back of the ionization area (13) with respect to the axis, $z$, of propagation of the electromagnetic radiation (14), at times $t_i$ (i = 1, 2, etc.), wherein the measured number is integrated during an interval $\Delta_t = (t_i - t_{i-1})$ for each measurement.

4. Method according to any one of the preceding claims, **characterized in that** the step of determining the chirality of the molecules comprises a step of comparing a number of electrons detected at the front and a number of electrons detected at the back of the ionization area (13) with respect to the axis, $z$, of propagation of the electromagnetic radiation (14).

5. Method according to any one of the preceding claims, **characterized in that** it moreover comprises a step of Fourier analysis of a temporal evolution of the electron distribution in order to obtain the frequency spectrum of the distribution.

6. Method according to claim 5, **characterized in that**, for a sample of single-specie molecules, the method moreover comprises a step of determining an enantiomeric excess from the frequency spectrum of the electron distribution.

7. Method according to any one of the preceding claims, **characterized in that** it moreover comprises a step of generating a spatial and/or angular distribution map P(x,t) of the emitted electrons from the distribution of the electrons as a function of time t, where x is the position of the electrons on the map.

8. Method according to claim 7, **characterized in that** it moreover comprises a step of Fourier analysis of each component of the distribution map.

9. Method according to claim 7, **characterized in that** it moreover comprises the following steps:

- determining the projection P(z,t) of the distribution map P(x,t) onto the axis, z, of propagation of the electromagnetic radiation; and
- Fourier analysis of the temporal evolution of the projection P(z,t) in order to obtain the frequency spectrum.

10. Method according to claim 9, **characterized in that**, for a sample of multi-species molecules, the method moreover comprises a step of determining the species of the sample from the frequency spectrum of the projection P(z,t) of the distribution map.

11. Method according to claim 9 or 10, **characterized in that** the method moreover comprises a step of determining the enantiomeric excess from the frequency spectrum of the projection P(z,t) of the distribution map of the electrons.

12. System (1) for measuring chirality, comprising:

- an ionization area (13) arranged in order to receive a sample of chiral molecules comprising at least one chemical species;
- an electromagnetic radiation source (10) arranged in order to emit an electromagnetic radiation (14) and to ionize the chiral molecules in the ionization area (13) by means of the electromagnetic radiation; and
- electron detection means (17a, 17b) arranged in order to detect a distribution of electrons produced by the ionization and emitted to the front and to the back of the ionization area (13) with respect to the axis, z, of propagation of the electromagnetic radiation (14);

**characterized in that** the system (1) moreover comprises:

- a polarization modulator (16) arranged in order to polarize the electromagnetic radiation (14) elliptically and arranged in order to make the polarization ellipticity of the radiation (14) vary continuously as a function of time; and
- a determination device arranged and/or programmed in order to determine the chirality of the molecules from the electron distribution detected continuously as a function of time.

13. System (1) according to claim 12, **characterized in that** the electron detection means (17a, 17b) comprise at least one of a magnetic field ejection asymmetry detector and a velocity map imaging spectrometer.

14. System (1) according to claim 12 or 13, **characterized in that** the electromagnetic radiation source (10) is a laser source.

15. System (1) according to claim 14, **characterized in that** the laser source (10) is a femtosecond pulsed laser source.

16. System (1) according to any one of claims 12 to 15, **characterized in that** it moreover comprises an ion detector arranged in order to detect the ionized molecules.

17. System (1) according to claim 16, **characterized in that** the ion detector is a mass spectrometer.

18. System (1) according to any one of claims 12 to 17, **characterized in that** the polarization modulator (16) comprises a quarter-wave plate arranged in order to be set in rotation about the axis, z, of propagation of the radiation.

19. System (1) according to any one of claims 12 to 18, **characterized in that** it moreover comprises an intensity modulator for the electromagnetic radiation and/or a wavelength modulator for the electromagnetic radiation.

20. System (1) according to any one of claims 15 to 19, **characterized in that** it moreover comprises a modulator for the duration of the pulses of the laser source (10).

21. System (1) according to any one of claims 12 to 20, **characterized in that** it is arranged in order to implement the method according to one of claims 1 to 11.

FIG. 1

EP 3 811 067 B1

FIG. 2A

FIG. 2B

EP 3 811 067 B1

Fréquence d'oscillation (Hz)

FIG. 2C

20

Distribution spaciale
des électrons émis

22

21

Carte de vitesses
des électrons

Excès énantiomérique
d'un échantillon mono-
espèce

Projection sur l'axe z

23

Composition
chimique d'un
échantillon
multi-espèces

24

Excès
énantiomérique
des espèces
du mélange

25

FIG. 3

FIG. 4

FIG. 5

FIG. 6A

FIG. 6B

FIG. 6C

FIG. 6D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018060120 A1

**Littérature non-brevet citée dans la description**

- **CHRISTIAN LUX et al.** *Photoelectron Circular Dichroism of Bicyclic Ketones from Multiphoton Ionization with Femtosecond Laser Puises*